# EUROPEAN PATENT SPECIFICATION

(11) **EP 4 131 717 B1**
(45) Date of publication and mention of the grant of the patent: **22.07.2026**
(21) Application number: 20931486.3
(22) Date of filing: 15.04.2020
(51) Int. Cl.: H02J 7/02, H02J 3/14, B60L 55/00, H02J 3/32, H02J 7/34, B60L 53/30, B60L 53/62, B60L 53/66, H02J 3/17

(54) **CHARGING AND DISCHARGING SWITCHING APPARATUS AND METHOD, AND BIDIRECTIONAL CHARGING SYSTEM**
LADE- UND ENTLADESCHALTVORRICHTUNG UND -VERFAHREN SOWIE BIDIREKTIONALES LADESYSTEM
APPAREIL ET PROCÉDÉ DE COMMUTATION DE CHARGE ET DE DÉCHARGE, ET SYSTÈME DE CHARGE BIDIRECTIONNELLE

(43) Date of publication of application: 08.02.2023
(73) Proprietor: Yinwang Intelligent Technologies Co., Ltd., Shenzhen, Guangdong 518129 (CN)
(72) Inventor: ZHANG, Peng, Shenzhen, Guangdong 518129 (CN); ZHENG, Yihong, Shenzhen, Guangdong 518129 (CN)
(74) Representative: Pfenning, Meinig & Partner mbB
(86) International application number: PCT/CN2020/084980
(87) International publication number: WO 2021/207985

(56) References cited:
- WO-A1-2019/151231
- CN-A- 105 305 596
- CN-A- 106 026 346
- CN-A- 108 407 625
- US-A- 6 104 160
- US-A1- 2013 113 413
- US-A1- 2019 160 962
- MASAYOSHI HAMANAKA ET AL: "A Study on Suppression Method of System Oscillation by Output Variation of Solar Power Generation at V2H", PROCEEDINGS OF EVS 31 & EVTEC 2018, KOBE, JAPAN, 1 October 2018 (2018-10-01), XP055535749

## Description

### TECHNICAL FIELD

This disclosure relates to the field of new energy vehicle technologies, and the invention relates to a charging and discharging switching apparatus and method, and a bidirectional charging system.

### BACKGROUND

With rapid development of new energy technologies, a bidirectional charging technology has been more widely used in the field of new energy. A new energy vehicle supporting a bidirectional charging function is used as an example. The new energy vehicle can receive and store electric energy provided by a power supply device, that is, for charging. The new energy vehicle can also provide electric energy to an external device, that is, for supplying power. The new energy vehicle supporting the bidirectional charging function can bring much convenience to a user. For example, the new energy vehicle may replace a power supply device to supply power to a home device of the user. Currently, a scenario in which electric energy of a new energy vehicle is released for use by a home device by using a bidirectional charging technology may also be referred to as vehicle to home (vehicle to home, V2H).

Generally, the bidirectional charging technology can be implemented only with participation of a charging and discharging switching apparatus. Specifically, the charging and discharging switching apparatus may be separately connected to the new energy vehicle, the power supply device, and the home device, and the charging and discharging switching apparatus controls a transmission path between the new energy vehicle and each of the home device and the power supply device, and a transmission path between the home device and the power supply device. It can be learned that, with participation of the charging and discharging switching apparatus, a power supply body that supplies power to the home device may be the new energy vehicle or the power supply device. A specific delay is generated during switching between different power supply bodies. Therefore, based on the current charging and discharging switching apparatus, power of the home device is interrupted for a specific time when a power supply body is switched.

Therefore, the current charging and discharging switching apparatus needs to be further studied.

US 2019/160962 A1 discloses a vehicle that includes a power storage device, a connector, a power converter, and an ECU. The connector and the power converter are configured to supply, to the power facility, power stored in the power storage device. When the vehicle is connected to the power facility via a power cable, the ECU is configured to control an upper limit SOC and a lower limit SOC in association with time. The upper limit SOC and lower limit SOC define an SOC usable range of the power storage device.

### SUMMARY

The object of the present invention is to provide a charging and discharging switching apparatus and method, and a bidirectional charging system, to help shorten power interruption time of a load device when a power supply body of the load device is switched. This object is solved by the subject matter of the independent claims and further advantages and improvements of the invention are listed in the dependent claims.

According to a first aspect according to the invention, an embodiment according to the invention provides a charging and discharging switching apparatus. The charging and discharging switching apparatus mainly includes a first switch, a second switch, a switching power supply, and a control unit. A first end of the first switch is configured to connect to a power supply device, a second end of the first switch is configured to connect to a load device, the second end of the first switch is separately connected to a first end of the second switch and the switching power supply, and a control end of the first switch is connected to the control unit. A second end of the second switch is configured to connect to a new energy vehicle, and a control end of the second switch is connected to the control unit. In addition, the control unit is further connected to the switching power supply. Based on the foregoing connection relationship, the control unit may control the switching power supply to discharge after a first condition is met, and turn on the second switch after the new energy vehicle is switched to a power supply state, to conduct a path through which the new energy vehicle supplies power to the load device. The control unit may turn on the first switch after a second condition is met, to conduct a path through which the power supply device supplies power to the load device.

In this embodiment according to the invention, the first condition and the second condition may be flexibly set based on an actual application scenario of the charging and discharging switching apparatus. This is not limited in this embodiment according to the invention. For example, the first condition may include that the power supply device stops supplying power, and the second condition may include that the power supply device restores supplying power. In this case, by using the charging and discharging switching apparatus provided in this embodiment according to the invention, after the power supply device stops supplying power, the power supply body of the load device may be switched to the new energy vehicle, and after the power supply device restores supplying power, the power supply body of the load device is switched back to the power supply device.

For another example, the first condition may include that a current time point is within a power supply time segment of a vehicle, and the second condition may include that the current time point is beyond the power supply time segment of the vehicle. By using the charging and discharging switching apparatus provided in this embodiment of this application, the power supply body of the load device may be switched to the new energy vehicle within the power supply time segment of the vehicle, or the power supply body of the load device may be switched to the power supply device beyond the power supply time segment of the vehicle.

According to the technical solution provided in this embodiment of this application, after the first condition is met, the control unit controls the switching power supply to discharge, and the switching power supply serves as the power supply body of the load device. A delay, generally, a microsecond-level delay may be reached for the control unit to control the switching power supply to discharge. The delay is far less than a delay for controlling the new energy vehicle to discharge. Therefore, this embodiment of this application helps shorten the power interruption time of the load device. After the new energy vehicle is switched to the power supply state, the control unit may control the switching power supply to stop discharging, and turn on the second switch, so that the new energy vehicle can supply power to the load device.

The charging and discharging switching apparatus provided in this embodiment of this application may further include a communications unit, and the communications unit is connected to the control unit. The control unit may further control, after the first condition is met, the communications unit to send first indication information, where the first indication information indicates the new energy vehicle to be switched to the power supply state. Then, the control unit controls the switching power supply to discharge. In this implementation, the charging and discharging switching apparatus can automatically control the new energy vehicle to be switched to the power supply state. Therefore, power can be supplied to the load device in a more timely manner, and a user operation is simplified. In addition, because the new energy vehicle can switch to the power supply state only after a specific delay, the charging and discharging switching apparatus first sends the first indication information, so that the new energy vehicle may be switched to the power supply state as soon as possible. This shortens discharging time of the switching power supply, helps reduce a capacity requirement for the switching power supply, and helps reduce production costs of the charging and discharging switching apparatus.

For example, after being switched to the power supply state, the new energy vehicle may send first response information to the control unit. After receiving the first response information sent by the new energy vehicle, the control unit may control the switching power supply to stop discharging, and then turn on the second switch. The first response information indicates that the new energy vehicle has been switched to the power supply state.

In a possible implementation, the control unit may further first turn off the first switch and the second switch, and then control the switching power supply to discharge. This improves safety of the charging and discharging switching apparatus and the load device.

In the charging and discharging switching apparatus provided in this embodiment of this application, before turning on the first switch after the second condition is met, the control unit may further control the communications unit to send second indication information, where the second indication information indicates the new energy vehicle to stop the power supply state. After the new energy vehicle stops supplying power, the control unit turns on the first switch. In this implementation, the charging and discharging switching apparatus can automatically control the new energy vehicle to stop the power supply state. This helps simplify a user operation. In addition, a specific delay is required for the new energy vehicle to stop the power supply state. Therefore, the charging and discharging switching apparatus first sends the second indication information. In this case, the new energy vehicle can stop the power supply state as early as possible.

In a possible implementation, after controlling the communications unit to send the second indication information, the control unit may further turn off the first switch and the second switch to control the switching power supply to discharge. This improves safety of the charging and discharging switching apparatus and the load device. When turning on the first switch after the second condition is met, the control unit may control, after receiving the second response information sent by the communications unit, the switching power supply to stop discharging, and turn on the first switch. The second response information indicates that the new energy vehicle has stopped the power supply state.

It may be understood that the power supply device may not only supply power to the load device, but also supply power to the new energy vehicle (the new energy vehicle is charged). For example, when turning on the first switch, the control unit may further turn on the second switch, to conduct a path through which the power supply device charges the new energy vehicle.

In addition, the switching power supply in the charging and discharging switching apparatus may be a battery. When supplying power to the load device, the power supply device may also charge the switching power supply. For example, when turning on the first switch, the control unit may further control the switching power supply to charge.

The first condition and the second condition provided in this embodiment of this application may be classified based on different states of the power supply device, and the charging and discharging switching apparatus can switch the power supply body of the load device based on the states of the power supply device. For example, the charging and discharging switching apparatus further includes a detection unit. An input end of the detection unit is connected to the first end of the first switch, and an output end of the detection unit is connected to the control unit. The detection unit may detect a power supply state of the power supply device. When the power supply device stops supplying power, the detection unit sends a first detection signal to the control unit. When the power supply device starts to supply power, the detection unit sends a second detection signal to the control unit. The control unit may further determine, when receiving the first detection signal, that the first condition is met, and determine, when receiving the second detection signal, that the second condition is met.

In this implementation, when the power supply device stops supplying power, the charging and discharging switching apparatus can switch to the new energy vehicle in time to supply power to the load device. This helps improve user experience.

The charging and discharging switching apparatus provided in this embodiment of this application can further implement a timing function. For example, first setting information may be set in the charging and discharging switching apparatus, and the first setting information may indicate a power supply time segment of a vehicle. The control unit may further determine that the first condition is met when the current time point is within the power supply time segment of the vehicle, and determine that the second condition is met when the current time point is beyond the power supply time segment of the vehicle.

For example, the power supply device is an industrial frequency power grid, and causes high electricity fees during electricity consumption peak hours. A user may set the electricity consumption peak hours as the power supply time segment of the vehicle, so that the new energy vehicle supplies power to the load device within this time segment. This helps reduce electricity fees of the user.

The charging and discharging switching apparatus provided in this embodiment of this application can further implement an intelligent switching function. For example, second setting information may be set in the charging and discharging switching apparatus. The second setting information may include at least one of the following information: power consumption statistics information of the load device, charge state information of the new energy vehicle, travel distance information of the new energy vehicle, and charging information of the power supply device. The control unit may further calculate a power supply time segment of a vehicle based on the second setting information. When a current time point is within the power supply time segment of the vehicle, it is determined that the first condition is met. When the current time point is beyond the power supply time segment of the vehicle, it is determined that the second condition is met.

In this implementation, the charging and discharging switching apparatus may automatically set the power supply time segment of the vehicle based on the second setting information. This helps simplify a user operation and further improve user experience.

According to a second aspect according to the invention, the invention further provides a charging and discharging switching method. The method is applied to the charging and discharging switching apparatus provided in any implementation of the first aspect. The charging and discharging switching apparatus may be separately connected to a load device, a power supply device, and a new energy vehicle. For technical effects of a corresponding solution in the first aspect, refer to the technical effects that may be obtained according to a corresponding solution in the first aspect. Repeated descriptions are not provided herein again.

For example, the charging and discharging switching method provided in this embodiment of this application mainly includes: The charging and discharging switching apparatus discharges to the load device after a first condition is met, and stops discharging the load device and conducts a path through which the new energy vehicle supplies power to the load device, after the new energy vehicle is switched to a power supply state. The charging and discharging switching apparatus conducts, after a second condition is met, a path through which the power supply device supplies power to the load device.

The charging and discharging switching apparatus may further control the new energy vehicle to be switched to the power supply state. For example, after the first condition is met, the charging and discharging switching apparatus may further send first indication information to the new energy vehicle. The first indication information may indicate the new energy vehicle to be switched to the power supply state. Then, the charging and discharging switching apparatus discharges to the load device.

For example, after receiving first response information sent by the new energy vehicle, the charging and discharging switching apparatus may stop discharging the load device. The first response information may indicate that the new energy vehicle has been switched to the power supply state.

The charging and discharging switching apparatus may further control the new energy vehicle to stop the power supply state. For example, after the second condition is met, the charging and discharging switching apparatus may first send second indication information to the new energy vehicle before conducting the path through which the power supply device supplies power to the load device. The second indication information may indicate that the new energy vehicle stops the power supply state. The charging and discharging switching apparatus may, after the new energy vehicle stops the power supply state, conduct the path through which the power supply device supplies power to the load device.

To shorten power interruption time of the load device and protect safety of the new energy vehicle and the load device, the charging and discharging switching apparatus may further discharge the load device after sending the second indication information. After receiving the second response information, the charging and discharging switching apparatus stops discharging the load device, and conducts the path through which the power supply device supplies power to the load device. The second response information may indicate that the new energy vehicle has stopped the power supply state.

In this embodiment of this application, the power supply device may alternatively charge the new energy vehicle through the charging and discharging switching apparatus. For example, after conducting the path through which the power supply device supplies power to the load device, the charging and discharging switching apparatus may further conduct a path through which the power supply device charges the new energy vehicle.

In this embodiment of this application, the power supply device may further charge the charging and discharging switching apparatus. For example, after conducting the path through which the power supply device supplies power to the load device, the charging and discharging switching apparatus may be further charged through the power supply device.

In this embodiment of this application, there are a plurality of possible implementations of the first condition and the second condition, so that the charging and discharging switching apparatus can flexibly switch a power supply body of the load device. An example is as follows.

In a possible implementation, the charging and discharging switching apparatus may further detect a power supply state of the power supply device. When the power supply device stops supplying power, the charging and discharging switching apparatus may determine that the first condition is met, so as to switch the power supply body of the load device to the new energy vehicle. When the power supply device starts to supply power, the charging and discharging switching apparatus may determine that the second condition is met, so as to switch the power supply body of the load device to the power supply device.

In another possible implementation, the charging and discharging switching apparatus is provided with first setting information, and the first setting information may indicate a power supply time segment of a vehicle. In this case, when a current time point is within the power supply time segment of the vehicle, the charging and discharging switching apparatus may further determine that the first condition is met, so as to switch the power supply body of the load device to the new energy vehicle. When the current time point is beyond the power supply time segment of the vehicle, the charging and discharging switching apparatus may determine that the second condition is met, so as to switch the power supply body of the load device to the power supply device.

In still another possible implementation, the charging and discharging switching apparatus is provided with second setting information. The second setting information may include at least one of the following information: power consumption statistics information of the load device, charge state information of the new energy vehicle, travel distance information of the new energy vehicle, charging information of the power supply device, and the like. In this case, the charging and discharging switching apparatus may further calculate a power supply time segment of a vehicle based on the second setting information. When a current time point is within the power supply time segment of the vehicle, the charging and discharging switching apparatus determines that the first condition is met, so as to switch the power supply body of the load device to the new energy vehicle. When the current time point is beyond the power supply time segment of the vehicle, the charging and discharging switching apparatus determines that the second condition is met, so as to switch the power supply body of the load device to the power supply device.

According to a third aspect according to the invention, the invention further provides a bidirectional charging system. The system may include a new energy vehicle, a load device, a power supply device, and the charging and discharging switching apparatus provided in any implementation of the first aspect. The charging and discharging switching apparatus is separately connected to the new energy vehicle, the load device, and the power supply device. For technical effects of a corresponding solution in the third aspect, refer to the technical effects that may be obtained according to a corresponding solution in the first aspect. Repeated descriptions are not provided herein again.

These aspects or other aspects and embodiments of this invention are clearer and more comprehensible in descriptions of the following embodiments.

### BRIEF DESCRIPTION OF DRAWINGS

FIG. 1 is a schematic diagram of an architecture of a bidirectional charging system;
FIG. 2 is a schematic diagram of a structure of a charging and discharging switching apparatus according to an embodiment of this application;
FIG. 3a is a schematic flowchart of switching a new energy vehicle to supply power to a load device when the new energy vehicle serves as a candidate power supply body according to an embodiment of this application;
FIG. 3b is a schematic flowchart of switching a power supply device to supply power to a load device when a new energy vehicle serves as a candidate power supply body according to an embodiment of this application;
FIG. 4A and FIG. 4B are a schematic diagram of five possible time segments in a working process of a charging and discharging switching apparatus;
FIG. 5a is a schematic flowchart of switching a new energy vehicle to supply power to a load device when a charging and discharging switching apparatus supports a timing function according to an embodiment of this application;
FIG. 5b is a schematic flowchart of switching a power supply device to supply power to a load device when a charging and discharging switching apparatus supports a timing function according to an embodiment of this application, and
FIG. 6 is a schematic flowchart of a charging and discharging switching method according to an embodiment of this application.

### DESCRIPTION OF EMBODIMENTS

With rapid development of new energy technologies, a bidirectional charging technology has been more widely used in the field of new energy. Especially in new energy vehicles, application of the bidirectional charging technology further expands application scenarios of the new energy vehicles. A new energy vehicle supporting a bidirectional charging function can not only receive and store electric energy provided by a power supply device (that is, charging), but also supply electric energy to an external device (that is, supplying power).

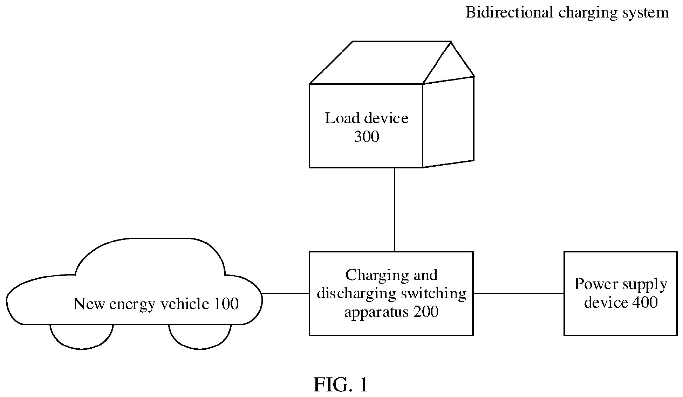

FIG. 1 shows an example of a bidirectional charging system. As shown in FIG. 1, the bidirectional charging system mainly includes a new energy vehicle 100, a charging and discharging switching apparatus 200, a load device 300, and a power supply device 400. The charging and discharging switching apparatus 200 is separately connected to the power supply device 400, the new energy vehicle 100, and the load device 300.

### 1. New energy vehicle 100

Currently, the new energy vehicle 100 is mostly driven by electric energy. The new energy vehicle 100 includes a large-capacity battery. In a charging process of the new energy vehicle 100, the new energy vehicle may receive electric energy, and store the received electric energy in the battery. Further, in a working process of the new energy vehicle 100, the battery may be used to discharge, so as to supply electric energy to the new energy vehicle 100. For example, the new energy vehicle 100 may discharge through the battery, to drive a motor in the new energy vehicle 100 to rotate. In this way, the new energy vehicle 100 can travel. For another example, the new energy vehicle 100 may discharge through the battery, to drive an in-vehicle device (such as an in-vehicle acoustic device or an in-vehicle navigator) inside the new energy vehicle 100 to work.

With application of the bidirectional charging technology to the new energy vehicle 100, more and more new energy vehicles 100 may further discharge through batteries, to supply power to another load device 300 outside the new energy vehicle 100. This state may also be referred to as a power supply state of the new energy vehicle 100.

### 2. Load device 300

As functions of the new energy vehicle 100 increase, the load device 300 also has a plurality of possible implementations. For example, the load device 300 may be another new energy vehicle, or the load device 300 may be a home device, such as a washing machine, a refrigerator, or a television. A scenario in which the new energy vehicle 100 supplies power to a home load device 300 may be referred to as V2H.

### 3. Power supply device 400

The power supply device 400 may charge the new energy vehicle 100, or may supply power to the load device 300. For example, the power supply device 400 may be connected to an industrial frequency power grid, and may receive electric energy provided by the industrial frequency power grid, to provide a stable output voltage for the load device 300 and the new energy vehicle 100. Generally, the output voltage may be a 220 V alternating current voltage.

### 4. Charging and discharging switching apparatus 200

As shown in FIG. 1, the charging and discharging switching apparatus 200 is separately connected to the power supply device 400, the new energy vehicle 100, and the load device 300. The charging and discharging switching apparatus 200 may manage a path between any two of the power supply device 400, the new energy vehicle 100, and the load device 300.

Specifically, the charging and discharging switching apparatus 200 needs to meet at least the following functions:
(1) A path between the power supply device 400 and the load device 300 is conducted, so that the power supply device 400 can supply power to the load device 300.
(2) A path between the power supply device 400 and the new energy vehicle 100 is conducted, so that the power supply device 400 can charge the new energy vehicle 100.
(3) A path between the new energy vehicle 100 and the load device 300 is conducted, so that the new energy vehicle 100 can supply power to the load device 300.

In this embodiment of this application, a device that supplies power to the load device 300 may be referred to as a power supply body of the load device 300. Under control of the charging and discharging switching apparatus 200, the power supply body of the load device 300 may be the power supply device 400, or may be the new energy vehicle 100.

Currently, when the charging and discharging switching apparatus 200 switches the power supply body of the load device 300, a specific delay usually causes power interruption of the load device 300. For example, the current power supply body of the load device 300 is the power supply device 400. When the power supply device 400 stops supplying power, the charging switching apparatus 200 needs to first control the new energy vehicle 100 to enable the power supply state. After the new energy vehicle 100 enables the power supply state, the charging switching apparatus 200 switches the power supply body of the load device 300 to the new energy vehicle 100.

From the time that the power supply device 400 stops supplying power to the time that the charging and discharging switching apparatus 200 switches the power supply body of the load device 300 to the new energy vehicle 100, and the new energy vehicle 100 starts to supply power, a delay of several seconds is required, which is far longer than power-off time that can be borne by the conventional load device 300, so that the load device 300 stops working due to power interruption.

In view of this, an embodiment of this application provides a charging and discharging switching apparatus 200. The charging and discharging switching apparatus 200 may supply power to a load device 300 during switching of a power supply body of the load device 300, so that power interruption time of the load device 300 can be greatly shortened, and the load device 300 can work continuously.

To make the objectives, technical solutions, and advantages of this application clearer, the following further describes this application in detail with reference to the accompanying drawings. A specific operation method in a method embodiment may also be applied to an apparatus embodiment or a system embodiment. It should be noted that in description of this application, "at least one" means one or more, and "a plurality of" means two or more. In view of this, in embodiments of the present invention, "a plurality of" may also be understood as "at least two". The term "and/or" describes an association relationship for describing associated objects and represents that three relationships may exist. For example, A and/or B may represent the following three cases: Only A exists, both A and B exist, and only B exists. In addition, the character "/" generally indicates an "or" relationship between the associated objects. In addition, it should be understood that in description of this application, terms such as "first" and "second" are merely used for distinguishing and description, but should not be understood as indicating or implying relative importance, or should not be understood as indicating or implying a sequence.

It should be noted that the "connection" in embodiments of this application refers to an electric connection, and the connection between two electrical elements may be a direct or indirect connection between the two electrical elements. For example, a connection between A and B may represent that A and B are directly connected to each other, or A and B are indirectly connected to each other through one or more other electrical elements. For example, the connection between A and B may also represent that A is directly connected to C, C is directly connected to B, and A and B are connected to each other through C.

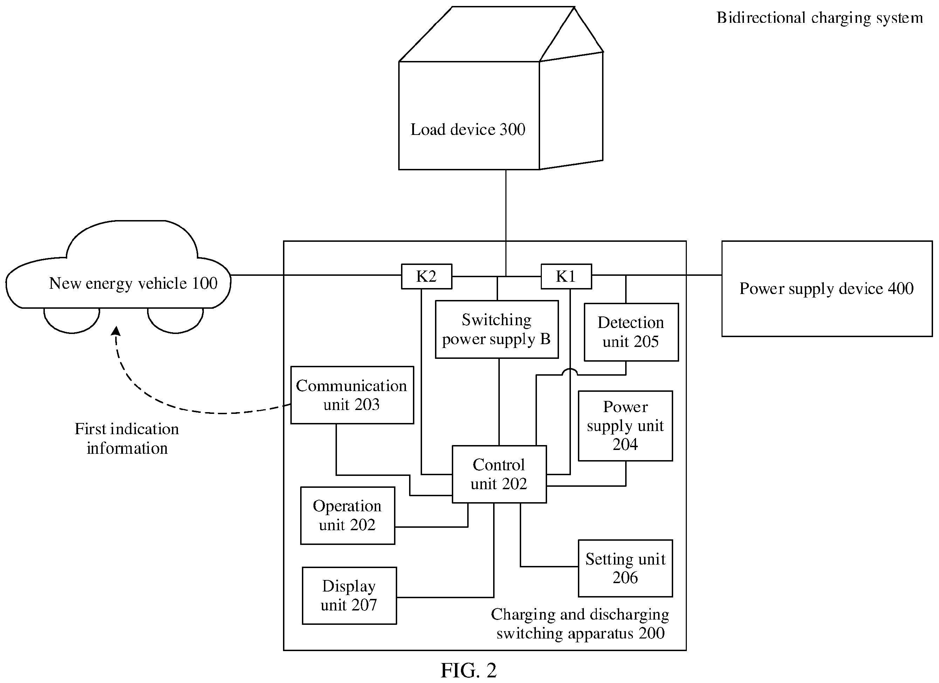

For example, FIG. 2 shows an example of a charging and discharging switching apparatus 200 according to an embodiment of this application. The charging and discharging switching apparatus 200 mainly includes a first switch K1, a second switch K2, a switching power supply B, and a control unit 201.

As shown in FIG. 2, the first switch K1 includes a first end, a second end, and a control end. The first end of the first switch K1 is connected to the power supply device 400, the second end of the first switch K1 is separately connected to the load device 300, the first end of the second switch K2, and the switching power supply B, and the control end of the first switch K1 is connected to the control unit 201.

In this embodiment of this application, the control unit 201 may send a first switch control signal to the first switch K1, to control turn-on or turn-off of the first switch K1. Generally, the first switch K1 may be a switch that can adapt to a large working current. For example, the first switch K1 may be a contactor.

The second switch K2 includes a first end, a second end, and a control end. The first end of the second switch K2 is connected to the second end of the first switch K1, the second end of the second switch K2 is connected to the new energy vehicle 100, and the control end of the second switch K2 is connected to the control unit 201.

In this embodiment of this application, the control unit 201 may send a second switch control signal to the second switch K2, to control turn-on or turn-off of the second switch K2. Generally, the second switch K2 may be a switch that can adapt to a large working current. For example, the second switch K2 may be a contactor.

The switching power supply B is connected to the control unit 201. In this embodiment of this application, the control unit 201 may send a power control signal to the switching power supply B. The power control signal may control a working state of the switching power supply B. It should be noted that the switching power supply B has a plurality of possible working states. Therefore, a third power control signal may also be implemented in a plurality of manners in specific implementation.

For example, the power control signal may be a discharging control signal. The control unit 201 may send a discharging control signal to the switching power supply B, so as to control the switching power supply B to start or end discharging. In a possible implementation, the switching power supply B may be a secondary battery that can store energy, that is, a battery. In this case, the power supply control signal may alternatively be a charging control signal, and the control unit 201 may further control, by using the charging control signal, the switching power supply B to start or end charging.

In this embodiment of this application, the control unit 201 may be a logic circuit that has a logical operation function. For example, the control unit 201 may be a processor, a central processing unit (central processing unit, CPU), a system on chip (system on chip, SoC), an electronic control unit (electronic control unit, ECU), or the like. Examples are not enumerated one by one in this embodiment of this application.

In the charging and discharging switching apparatus 200 shown in FIG. 2, the control unit 201 may control the switching power supply B to discharge after a first condition is met, and control the switching power supply B to stop discharging and turn on the second switch K2 after the new energy vehicle 100 is switched to the power supply state, to conduct a path through which the new energy vehicle 100 supplies power to the load device 300. The control unit 201 may further turn on the first switch K1 after a second condition is met, to conduct a path through which the power supply device 400 supplies power to the load device 300.

It should be noted that the first condition and the second condition may be flexibly set based on an actual application scenario of the charging and discharging switching apparatus 200. This is not limited in this embodiment of this application. For example, the first condition may include that the power supply device 400 stops supplying power, and the second condition may include that the power supply device 400 restores supplying power. In this case, by using the charging and discharging switching apparatus 200 provided in this embodiment of this application, after the power supply device 400 stops supplying power, a power supply body of the load device 300 may be switched to the new energy vehicle 100. After the power supply device 400 restores supplying power, the power supply body of the load device 300 is switched back to the power supply device 400.

For another example, the first condition may include that a current time point is within a power supply time segment of a vehicle, and the second condition may include that the current time point is beyond the power supply time segment of the vehicle. By using the charging and discharging switching apparatus 200 provided in this embodiment of this application, the power supply body of the load device 300 may be switched to the new energy vehicle 100 within the power supply time segment of the vehicle, or the power supply body of the load device 300 may be switched to the power supply device 400 beyond the power supply time segment of the vehicle.

For another example, the charging and discharging switching apparatus 200 may further include an operation unit 202, and the operation unit 202 may be a touchscreen, a mechanical button, or the like. The operation unit 202 may generate an operation instruction according to an operation of a user. In this case, the first condition may include that a first operation instruction is received, and the first operation instruction is used to instruct the new energy vehicle 100 to supply power to the load device 300. The second condition may include that a second operation instruction is received, and the second operation instruction is used to instruct the power supply device 400 to supply power to the load device 300. According to this embodiment of this application, the user may switch the power supply body of the load device 300 by operating the charging and discharging switching apparatus 200.

In a possible implementation, as shown in FIG. 2, the charging and discharging switching apparatus 200 may further include a display unit 207. The display unit 207 may display a current state (a power supply state, an intermediate state, or a charging state) of the new energy vehicle 100, or may display a current power supply body (the new energy vehicle 100 or the power supply device 400) of the load device 300. Alternatively, when the new energy vehicle 100 is in a charging state, a charging current, a charging voltage, charging duration, charged power, a state of charge (state of charge, SOC) of the new energy vehicle 100, and the like are displayed.

Further, the display unit 207 and the operation unit 202 may also be integrated into a same touch-control screen. For a specific implementation, refer to the conventional technology, and details are not described herein.

In conclusion, the first condition and the second condition may have a plurality of possible implementations, and are not enumerated one by one in this embodiment of this application. It may be understood that a plurality of implementations of the first condition (the second condition is similar) may be compatible with one another. For example, the first condition may include that the first operation instruction is received, and/or that the power supply device 400 stops supplying power. Details are not described in this embodiment of this application again.

Next, the charging and discharging switching apparatus 200 under the first condition and the charging and discharging switching apparatus 200 under the second condition are separately further described by using examples.

### First condition

The control unit 201 controls the switching power supply B to discharge after the first condition is met, and controls the switching power supply B to stop discharging and turn on the second switch K2 after the new energy vehicle is switched to the power supply state, to conduct a path through which the new energy vehicle 100 supplies power to the load device 300.

Specifically, after the first condition is met, the control unit 201 controls the switching power supply B to discharge, and the switching power supply B serves as the power supply body of the load device 300. A delay, generally, a microsecond-level delay may be reached for the control unit 201 to control the switching power supply B to discharge. The delay is far less than a delay for controlling the new energy vehicle 100 to be switched to the power supply state. Therefore, this embodiment of this application helps shorten the power interruption time of the load device 300.

It may be understood that, to prevent an output voltage of the switching power supply B from flowing back into the new energy vehicle 100 and the power supply device 400, in a possible implementation, the control unit 201 may further first turn off the first switch and the second switch, and then control the switching power supply B to discharge.

After the new energy vehicle is switched to the power supply state, the control unit 201 turns on the second switch K2. As shown in FIG. 2, the second switch K2 is connected between the new energy vehicle 100 and the load device 300. Therefore, after the second switch K2 is turned on, a path between the new energy vehicle 100 and the load device 300 may be conducted, so that the new energy vehicle 100 can supply power to the load device 300.

It should be noted that the new energy vehicle 100 can output a voltage to the second switch K2 only in the power supply state. After the first condition is met, the user may control the new energy vehicle 100 to be switched to the power supply state, or the charging and discharging switching apparatus 200 may automatically control the new energy vehicle 100 to be switched to the power supply state.

For example, as shown in FIG. 2, the charging and discharging switching apparatus 200 may further include a communications unit 203, and the communications unit 203 is connected to the control unit 201. In this embodiment of this application, the communications unit 203 may support communication between the charging and discharging switching apparatus 200 and another device. For example, the communications unit 203 may be a communications interface, a transceiver, or a transceiver circuit. Details are not enumerated one by one in this embodiment of this application.

The control unit 201 may further control the communications unit 203 to send first indication information after the first condition is met. The first indication information may indicate the new energy vehicle 100 to be switched to the power supply state. After receiving the first indication information, the new energy vehicle 100 may control a battery inside the new energy vehicle 100 to discharge. After the control unit 201 turns on the second switch K2, an output voltage of the new energy vehicle 100 may be transmitted to the load device 300 through the second switch K2, to supply power to the load device 300.

Generally, the new energy vehicle 100 may first determine whether power supply adjustment is met currently, and then switch to the power supply state after determining that the power supply condition is met. If the power supply condition is not met, the new energy vehicle 100 may feed back a power supply failure response to the charging and discharging switching apparatus 200. The power supply condition may be flexibly set based on an application scenario of the new energy vehicle 100. For example, the power supply condition may include that a state of charge of the new energy vehicle 100 shows that a charge margin of the new energy vehicle 100 is higher than a charge threshold, and/or the new energy vehicle 100 is in a park (park, P) gear, and/or the new energy vehicle 100 communicates normally with the charging and discharging switching apparatus 200, and/or the new energy vehicle 100 has no high-voltage fault (the new energy vehicle 100 can normally output a high voltage).

In a possible implementation, the communications unit 203 may support wireless communication. To be specific, the communications unit 203 may send the first indication information to the new energy vehicle 100 in a wireless communication manner. It may be understood that, the National Standard GB 18487 of the People's Republic of China for a conductive power supply system of an electric vehicle specifies that a control panel (control panel, CP) message is transmitted between the new energy vehicle 100 and the charging and discharging switching apparatus 200 through wired communication, and the standard specifies that the CP message can carry only a specific type of information. If control information provided by the charging and discharging switching apparatus 200 to the new energy vehicle 100 in this embodiment of this application is transmitted through wired communication, there may be a problem that does not comply with the standard. In view of this, in this embodiment of this application, the communications unit 203 may transmit the control information to the new energy vehicle 100 in a form of wireless communication.

Generally, after controlling the communications unit 203 to send the first indication information, the control unit 201 may control the switching power supply B to start discharging. This is because after receiving the first indication information, the new energy vehicle 100 needs a specific delay to be switched to the power supply state. The control unit 201 first sends the first indication information, so that the new energy vehicle 100 can switch to the power supply state as soon as possible. In this way, time for the switching power supply B to supply power to the load device 300 can be shortened, a capacity requirement on the switching power supply B is lowered, and costs of the charging and discharging switching apparatus 200 can be reduced. In addition, a delay in controlling, by the control unit 201, the communications unit 203 to send the first indication information is short, and generally does not greatly affect power interruption time of the load device 300.

After sending the first indication information, the control unit 201 controls the switching power supply B to discharge. After the new energy vehicle 100 is switched to the power supply state, the control unit 201 controls the switching power supply B to stop discharging. For example, the control unit 201 determines the power supply state of the new energy vehicle 100 in at least the following two possible implementations.

In a possible implementation, the control unit 201 may be configured with a first delay, and the first delay is not less than a delay required by the new energy vehicle 100 to be switched to the power supply state. After sending the first indication information, the control unit 201 waits for the first delay. After the control unit 201 waits for the first delay, it means that the new energy vehicle 100 has been switched to the power supply state. In this case, the control unit 201 may control the switching power supply B to stop discharging, and turn on the second switch K2, so that the new energy vehicle 100 supplies power to the load device 300.

In another possible implementation, after being switched to the power supply state based on the first indication information, the new energy vehicle 100 may further send first response information to the charging and discharging switching apparatus 200. After the communications unit 203 receives the first response information, it means that the new energy vehicle 100 has been switched to the power supply state. In this case, the control unit 201 may control the switching power supply B to stop discharging, and turn on the second switch K2, so that the new energy vehicle 100 supplies power to the load device 300.

In addition, in a process of supplying power to the load device 300, the new energy vehicle 100 may further periodically report an SOC, so that the charging and discharging switching apparatus 200 can monitor the SOC of the new energy vehicle 100 in real time. A setting unit 206 of the charging and discharging switching apparatus may buffer a charge threshold, and the charging and discharging switching apparatus 200 determines, based on the SOC of the new energy vehicle 100, whether a charge margin of the new energy vehicle 100 is less than the charge threshold. When the charge margin of the new energy vehicle 100 is less than the charge threshold (equivalent to a specific implementation of the second condition), the charging and discharging switching apparatus 200 may switch the power supply body of the load device 300 to the power supply device 400, or when the charge margin of the new energy vehicle 100 is less than the charge threshold, the charging and discharging switching apparatus 200 indicates the new energy vehicle 100 to stop supplying power.

### Second condition

After the second condition is met, the control unit 201 may turn on the first switch K1, to conduct a path through which the power supply device 400 supplies power to the load device 300.

It may be understood that, if the new energy vehicle 100 supplies power to the load device before the second condition is met, the control unit 201 may further first turn off the second switch K2, and then turn on the first switch K1 after the second condition is met, to prevent the load device 300 from being damaged by an excessively large current input to the load device 300.

Specifically, after the second condition is met, the control unit 201 turns off the second switch K2. It may be understood that, in a case in which the power supply device 400 does not supply power, the first switch K1 may be turned off. Therefore, after the control unit 201 turns off the second switch K2, both the first switch K1 and the second switch K2 are in an off state. In this case, the control unit 201 may control the switching power supply B to discharge, so that the switching power supply B supplies power to the load device 300. Then, the control unit 201 turns on the first switch K1, and the power supply device 400 supplies power to the load device 300.

In a possible implementation, after turning off the second switch K2, the control unit 201 may further first control the communications unit 203 to send second indication information to the new energy vehicle 100. The second indication information may indicate the new energy vehicle 100 to stop the power supply state. Then, the control unit 201 turns on the first switch K1, so that the power supply device 400 can supply power to the load device 300. In this implementation, damage to the load device 300 caused by factors such as poor internal contact of the charging and discharging switching apparatus 200 can be prevented. This helps further improve safety of the load device 300.

It should be noted that "the second indication information may indicate the new energy vehicle 100 to stop the power supply state" may be understood as that the second indication information indicates the new energy vehicle 100 to be switched to the charging state, or may be understood as that the second indication information indicates the new energy vehicle 100 to be switched to an intermediate state in which neither charging nor discharging is performed. A specific implementation of the second indication information may be determined based on an actual application scenario. This is not limited in this embodiment of this application.

In a possible implementation, the control unit 201 is configured with a second delay, and the second delay is not less than a delay required by the new energy vehicle 100 to stop the power supply state. After sending the second indication information, the control unit 201 may wait for the second delay. After the control unit 201 waits for the second delay, it means that the new energy vehicle 100 has stopped the power supply state. In this case, the control unit 201 turns on the first switch K1, so that the power supply device 400 can supply power to the new energy vehicle 100.

In another possible implementation, after the new energy vehicle 100 stops the power supply state based on the second indication information, the new energy vehicle 100 may send second response information to the charging and discharging switching apparatus 200. After the communications unit 203 receives the second response information, it means that the new energy vehicle 100 has stopped the power supply state. In this case, the control unit 201 turns on the first switch K1, so that the power supply device 400 can supply power to the new energy vehicle 100.

It may be understood that the power supply device 400 may further charge the new energy vehicle 100. Specifically, when turning on the first switch K1, the control unit 201 may further turn on the second switch K2, so that a path between the new energy vehicle 100 and the power supply device 400 is conducted, and the power supply device 400 may supply power to the new energy vehicle 100.

It should be noted that, before turning on the second switch K2, the charging and discharging switching apparatus 200 may first control the new energy vehicle 100 to be switched to the charging state. For example, the control unit 201 may indicate, by using the second indication information, the new energy vehicle 100 to switch from the power supply state to the charging state. After the second response information is received, the first switch K1 and the second switch K2 are turned on at the same time.

Certainly, the control unit 201 may alternatively start charging the new energy vehicle 100 at any moment when the power supply device 400 supplies power to the load device 300. For example, the control unit 201 may send third indication information to the new energy vehicle 100, and indicate, by using the third indication information, the new energy vehicle 100 to switch from the intermediate state to the charging state. After being switched to the charging state, the new energy vehicle 100 may return third response information to the charging and discharging switching apparatus 200. After the communications unit 203 receives the third response information, the control unit 201 turns on the second switch K2.

It may be understood that the power supply device 400 may further charge the switching power supply B. Specifically, when turning on the first switch K1, the control unit 201 may further send a first charging control signal to the switching power supply B. The first charging control signal may indicate the switching power supply B to charge. Further, after power of the switching power supply B reaches a safety upper limit, the control unit 201 may further send a second charging control signal to the switching power supply B. The second charging control signal may indicate the switching power supply B to stop charging.

As shown in FIG. 2, the charging and discharging switching apparatus 200 may further include a power supply unit 204. The power supply unit 204 may supply power to the interior of the charging and discharging switching apparatus 200. In a possible implementation, the power supply unit 204 may alternatively be a battery. When the power supply device 400 supplies power to the load device 300, the control unit 201 may further control the power supply unit 204 to supply power. A specific implementation is not described again.

Next, the charging and discharging switching apparatus provided in this embodiment of this application is further described by using the following scenario as an example.

Scenario 1: The new energy vehicle 100 is used as a candidate power supply body of the load device 300.

Specifically, in Scenario 1, when the power supply device 400 stops supplying power (for example, the power supply device 400 is faulty), the new energy vehicle 100 may replace the power supply device 400 to supply power to the load device 300.

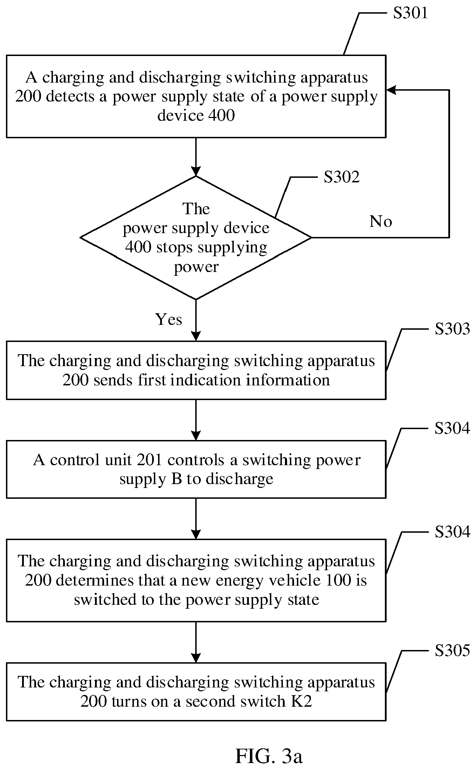

For example, a process in which the new energy vehicle 100 replaces the power supply device 400 may be shown in FIG. 3a, and mainly includes the following steps.

S301: When the power supply device 400 supplies power to the load device 300, the charging and discharging switching apparatus 200 detects a power supply state of the power supply device 400, so as to determine whether the power supply device 400 stops supplying power (S302).

For example, as shown in FIG. 2, the charging and discharging switching apparatus 200 may further include a detection unit 205. An input end of the detection unit 205 is connected to a first end of the first switch, and an output end of the detection unit 205 is connected to the control unit 201. The detection unit 205 may detect a power supply state of the power supply device, and send a first detection signal to the control unit 201 when the power supply device 400 stops supplying power.

In this case, after receiving the first detection signal, the control unit 201 may determine that the power supply device 400 stops supplying power, and continue to perform step S303. Otherwise, if the power supply device 400 still keeps supplying power, the detection unit 205 may continue to perform step S301 to detect the power supply state of the power supply device 400.

S303. The control unit 201 controls the communications unit 203 to send first indication information, where the first indication information may indicate the new energy vehicle 100 to be switched to the power supply state.

S304. The control unit 201 controls the switching power supply B to discharge.

S305: After determining that the new energy vehicle 100 is switched to the power supply state, the control unit 201 controls the switching power supply B to stop discharging, turns on the second switch K2, and turns off the first switch K1, so that the new energy vehicle 100 supplies power to the load device 300.

In a possible implementation, the control unit 201 may further control the switching power supply B to charge, and the new energy vehicle 100 may further provide electric energy for charging the switching power supply B.

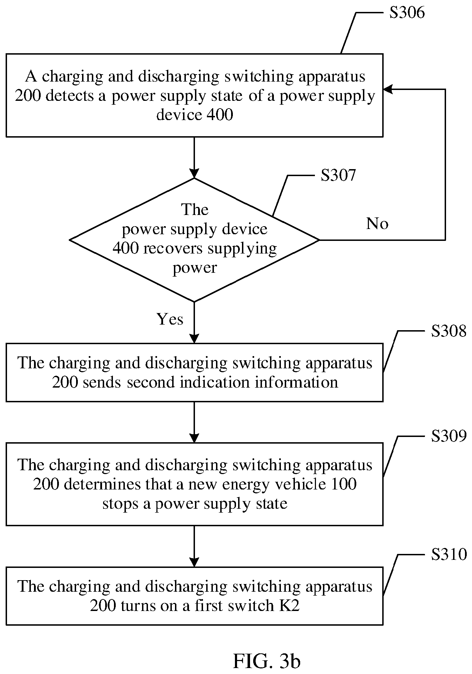

When the new energy vehicle 100 supplies power to the load device 300, the detection unit 205 may further continue to detect the power supply state of the power supply device 400, so as to switch a power supply body of the load device 300 to the power supply device 400 after the power supply device 400 restores supplying power. For example, a process in which the power supply device 400 restores supplying power to the load device 300 may be shown in FIG. 3b, and mainly includes the following steps.

S306. The charging and discharging switching apparatus 200 detects the power supply state of the power supply device 400, so as to determine whether the power supply device 400 restores supplying power (S307).

For example, the detection unit 205 may send a second detection signal to the control unit 201 when the power supply device 400 starts to supply power. In this case, after receiving the second detection signal, the control unit 201 may determine that the power supply device 400 restores supplying power, and continue to perform step S308. Otherwise, if the power supply device 400 still does not restore supplying power, the detection unit 205 may continue to perform S306 to detect the power supply state of the power supply device 400.

To protect safety of the new energy vehicle 100 and the load device 300, for example, after receiving the second detection signal, the control unit 201 may further turn off the first switch K1 and the second switch K2, to prevent an output voltage of the power supply device 400 from damaging the new energy vehicle 100 and the load device 300. In this case, the control unit 201 may control the switching power supply B to discharge, so as to keep supplying power to the load device 300.

S308. The control unit 201 controls the communications unit 203 to send second indication information, where the second indication information may indicate the new energy vehicle 100 to stop the power supply state.

S309. The control unit 201 determines that the new energy vehicle 100 stops the power supply state.

S310. The control unit 201 turns on the first switch K1, so that the power supply device 400 supplies power to the load device 300.

In a possible implementation, the control unit 201 may further control the switching power supply B to charge, and the power supply device 400 provides electric energy for charging the switching power supply B. In a possible implementation, the control unit 201 may further indicate, by using second indication information or third indication information, the new energy vehicle 100 to be switched to the charging state. When turning on the first switch K1, the control unit 201 may further turn on the second switch K2, so that the power supply device 400 provides electric energy for charging the new energy vehicle 100.

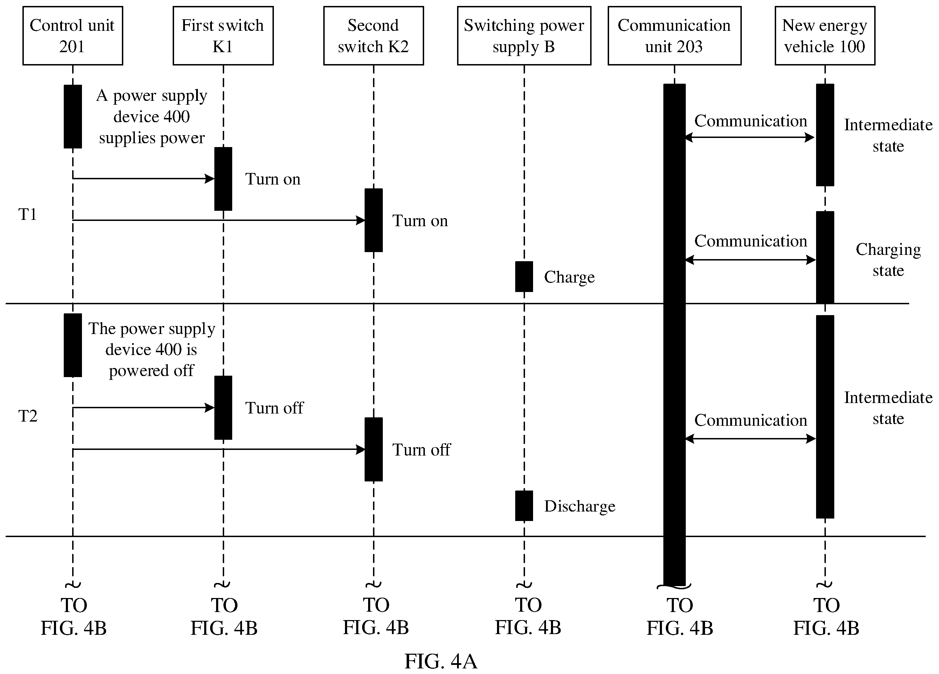

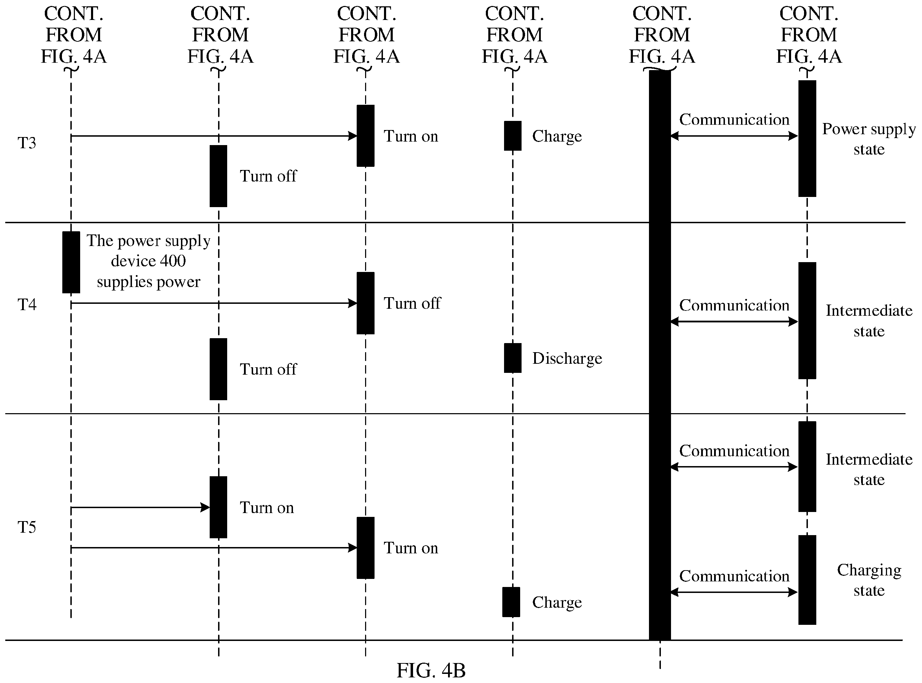

In a bidirectional charging system provided in this embodiment of this application, there may be at least five time segments T1 to T5 shown in FIG. 4A and FIG. 4B. It should be noted that a black rectangle within any time segment is only used to indicate a state of a corresponding structure (a unit, a power supply, or a switch) in the time segment, and does not indicate duration of the state or a sequence of state changes between different structures.

In the time segment T1, the control unit 201 determines that the power supply device 400 supplies power, and the control unit 201 turns on the first switch K1 and the second switch K2. The power supply device 400 may supply power to the load device 300 and the switching power supply B. In this phase, the new energy vehicle 100 may be in an intermediate state, or may be in a charging state.

In the time segment T2, the control unit 201 determines that the power supply device 400 is powered off, that is, the power supply device 400 stops supplying power. The control unit 201 turns off the first switch K1 and the second switch K2, and controls the switching power supply B to discharge, so that the switching power supply B supplies power to the load device 300. In this phase, the control unit 201 indicates, through the communications unit 203, the new energy vehicle 100 to be switched to an intermediate state in which neither charging nor discharging is performed.

In the time segment T3, the control unit 201 indicates, through the communications unit 203, the new energy vehicle 100 to be switched to the power supply state. The control unit 201 controls the switching power supply B to charge, turns on the second switch, and keeps the first switch K1 turn off at the same time, so that the new energy vehicle 100 can separately supply power to the switching power supply B and the load device 300.

In the time segment T4, the control unit 201 detects that the power supply device 400 restores supplying power. The control unit 201 turns off the second switch K2, controls the switching power supply B to discharge, and keeps the first switch K1 turn off at the same time. The control unit 201 further indicates, through the communications unit 203, the new energy vehicle 100 to be switched to the intermediate state.

In the time segment T5, the control unit 201 turns on the first switch K1 and the second switch K2, and controls the switching power supply B to charge. In this phase, the new energy vehicle 100 may be in an intermediate state, or may be in a charging state.

Scenario 2: The new energy vehicle 100 supplies power within a power supply time segment of a vehicle.

The charging and discharging switching apparatus 200 provided in this embodiment of this application may further support a timing function. The power supply time segment of the vehicle is set, so that a user can more flexibly use a bidirectional charging function of the new energy vehicle 100. For example, the power supply device 400 is an industrial frequency power grid. In most current industrial frequency power grid charging standards, electricity expenses are high during peak hours of daily electricity consumption. In view of this, peak hours of electricity consumption may be set as the power supply time segment of the vehicle. The new energy vehicle 100 supplies power to the load device 300 within the power supply time segment of the vehicle, and the power supply device 400 supplies power to the load device 300 in another time segment. It can be learned that the electricity fees can be effectively reduced for a user by setting the power supply time segment of the vehicle.

For example, the charging and discharging switching apparatus 200 may be provided with first setting information, and the first setting information may indicate the power supply time segment of the vehicle. As shown in FIG. 2, the charging and discharging switching apparatus 200 may further include a setting unit 206. The setting unit 206 may buffer the first setting information (the power supply time segment of the vehicle). In addition, the setting unit 206 may also buffer other setting information of the charging and discharging switching apparatus 200. For example, the setting unit 206 may further buffer the charge threshold, a user account status (account login or logout), and the like.

In a case in which the power supply time segment of the vehicle is set, when a current time point is within the power supply time segment of the vehicle, the control unit 201 may determine that a first condition is met, so as to switch a power supply body of the load device 300 to the new energy vehicle 100. When a current time point is beyond the vehicle power supply time segment, the control unit 201 determines that a second condition is met, so as to switch a power supply body of the load device 300 to the power supply device 400.

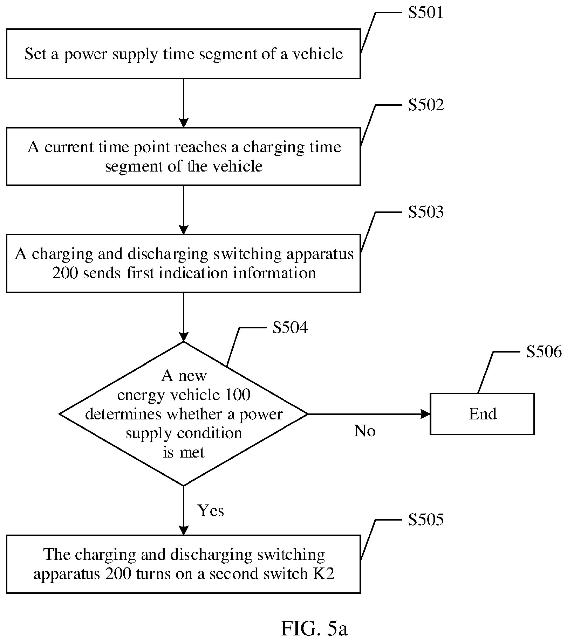

For example, a process of switching the power supply body of the load device 300 to the new energy vehicle 100 may be shown in FIG. 5a, and mainly includes the following steps.

S501: Set a power supply time segment of a vehicle. For example, an operation instruction may be generated by an operation unit 202 according to an operation of a user, and the operation instruction may indicate first setting information. For example, the operation unit 202 may be a touchscreen, and the user performs a touch operation on the touchscreen, so as to complete setting of the power supply time segment of the vehicle. For another example, the communications unit 203 may receive first setting information, and the first setting information may be sent by a client. For example, the user may set the power supply time segment of the vehicle through the client, and the client may send the first setting information to the charging and discharging switching apparatus 200 based on the power supply time segment of the vehicle that is set by the user.

S502. The control unit 201 continuously performs timing until a current time point reaches the power supply time segment of the vehicle.

S503. The control unit 201 sends first indication information to the new energy vehicle 100, to indicate the new energy vehicle 100 to be switched to a power supply state. In addition, the control unit 201 turns off the first switch K1 and the second switch K2, to control the switching power supply B to discharge.

S504. The new energy vehicle 100 determines whether a current state meets a power supply condition. A specific determining process is not described again. If the power supply condition is met, step S505 continues to be performed; or if the power supply condition is not met, step S506 continues to be performed.

S505: The new energy vehicle 100 sends first response information to the charging and discharging switching apparatus 200. After receiving the first response information, the charging and discharging switching apparatus 200 may control the switching power supply B to end discharging, turn on the second switch K2, and turn off the first switch K1, so that the new energy vehicle 100 supplies power to the load device 300.

S506. The new energy vehicle 100 sends a power supply failure response to the charging and discharging switching apparatus 200. After receiving the power supply failure response, the charging and discharging switching apparatus 200 ends the charging and discharging switching process.

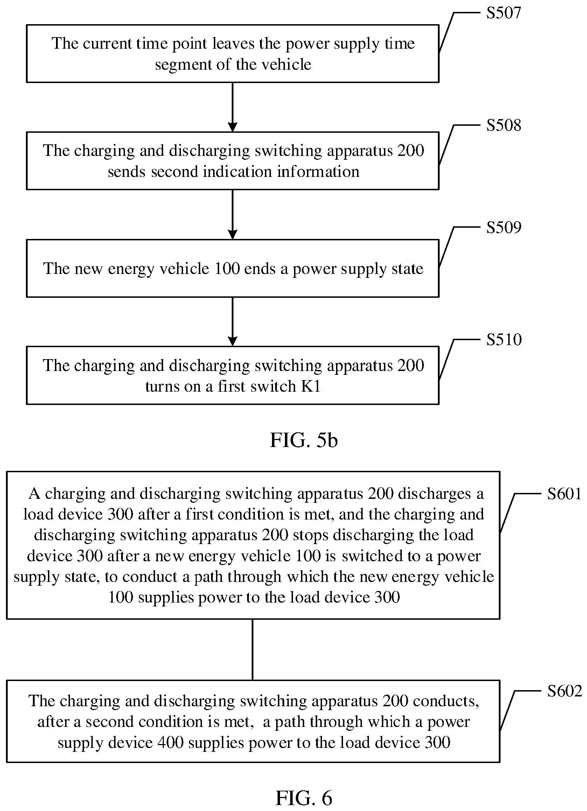

It may be understood that, after step S505, the charging and discharging switching apparatus 200 may further continue to perform timing. After the current time point leaves the power supply time segment of the vehicle, the charging and discharging switching apparatus 200 may further switch the power supply body of the load device 300 back to the power supply device 400. For example, the process may be shown in FIG. 5b, and mainly includes the following steps.

S507. The control unit 201 continuously performs timing until the current time point leaves the power supply time segment of the vehicle.

S508. The control unit 201 sends second indication information to the new energy vehicle 100, to indicate the new energy vehicle 100 to end the power supply state. In addition, the control unit 201 turns off the first switch K1 and the second switch K2, to control the switching power supply B to discharge.

S509: The new energy vehicle 100 ends the power supply state based on the second indication information, and sends second response information to the charging and discharging switching apparatus 200.

S510: After receiving the second response information, the charging and discharging switching apparatus 200 controls the switching power supply B to stop discharging, and turns on the first switch K1, so that the power supply device 400 supplies power to the load device 300.

### Scenario 3: intelligent switching

Based on Scenario 2, the charging and discharging switching apparatus 200 provided in this embodiment of this application may be further combined with intelligent analysis, to further improve user experience. For example, the user may configure second setting information for the charging and discharging switching apparatus based on a use habit, a use requirement, and a use scenario of the user. For example, the second setting information may include at least one of the following information: power consumption statistics information of the load device 300, charge state information of the new energy vehicle 100, travel distance information of the new energy vehicle 100, charging information of the power supply device 400, and the like. The control unit 201 may calculate a power supply time segment of a vehicle based on the second setting information.

For example, the charging information of the power supply device 400 includes charging standards of the power supply device 400 in different time segments. For example, a charging standard from 18:00 to 22:00 is 1 yuan/kWh, and a charging standard in another time segment is 0.6 yuan/kWh.

The control unit 201 may determine, based on the charging information of the power supply device 400, that the new energy vehicle 100 supplies power to the load device 300 from 18:00 to 22:00, so as to reduce electricity fees of the user.

Further, the charge state information of the new energy vehicle 100 includes a current charge margin of the new energy vehicle 100, and the travel distance information of the new energy vehicle 100 includes a distance in a form required by the new energy vehicle 100 in a future time segment. The control unit 201 may obtain a charge threshold of the new energy vehicle 100 through calculation based on the charge state information of the new energy vehicle 100 and the travel distance information of the new energy vehicle 100.

Before switching the new energy vehicle 100 to a power supply body of the load device 300, the control unit 201 may further first determine, based on the power consumption statistics information of the load device 300, whether an insufficient charge of the new energy vehicle 100 is caused by supplying power to the load device 300. For example, the power consumption statistics information of the load device 300 may indicate a change of a power consumption condition of the load device 300 in a time segment. For example, the power consumption statistics information of the load device 300 may indicate that power consumption of the load device 300 from 7:30 to 8:00 and from 18:30 to 19:30 every day is far greater than that in another time segment.

Therefore, although the new energy vehicle 100 supplies power to the load device 300 from 18:00 to 22:00, electricity fees of the user may be reduced. However, if the load device 300 consumes excessive charges from 18:30 to 19:30, the charging and discharging switching apparatus 200 may still control the power supply device 400 to supply power to the load device 300 from 18:30 to 19:30, and the new energy vehicle 100 supplies power in another time segment from 18:00 to 22:00.

It may be understood that the foregoing is merely a specific example. Other application scenarios are not enumerated one by one.

After the power supply time segment of the vehicle is obtained through calculation, switching of the power supply main body of the load device 300 may be controlled according to a process similar to that in Scenario 2, and details are not described herein again.

Based on a same technical concept, an embodiment of this application further provides a charging and discharging switching method. The method may be applied to a charging and discharging switching apparatus in a bidirectional charging system. Specifically, the charging and discharging switching apparatus may implement the charging and discharging switching method provided in this embodiment of this application by using software, hardware, or a combination of software and hardware. This is not limited in this embodiment of this application.

For example, the charging and discharging switching method provided in this embodiment of this application may be implemented by the charging and discharging switching apparatus provided in any one of the foregoing embodiments. Details are not described again. For example, the charging and discharging switching apparatus 200 shown in FIG. 2 is used as an example. The charging and discharging switching method provided in this embodiment of this application may be shown in FIG. 6, and mainly includes the following steps.

S601: The charging and discharging switching apparatus 200 discharges to the load device 300 after a first condition is met, and the charging and discharging switching apparatus 200 stops discharging the load device 300 and conducts a path through which the new energy vehicle 100 supplies power to the load device 300, after the new energy vehicle 100 is switched to a power supply state.

S602: The charging and discharging switching apparatus 200 conducts, after the second condition is met, a path through which the power supply device 400 supplies power to the load device 300.

The charging and discharging switching apparatus 200 may further control the new energy vehicle 100 to be switched to a power supply state. For example, after the first condition is met, the charging and discharging switching apparatus 200 may further send first indication information to the new energy vehicle 100. The first indication information may indicate the new energy vehicle 100 to be switched to the power supply state. Then, the charging and discharging switching apparatus 200 discharges to the load device 300.

For example, after receiving first response information sent by the new energy vehicle, the charging and discharging switching apparatus 200 may stop discharging the load device 300. The first response information may indicate that the new energy vehicle has been switched to the power supply state.

The charging and discharging switching apparatus 200 may further control the new energy vehicle 100 to stop the power supply state. For example, after the second condition is met, the charging and discharging switching apparatus 200 may first send second indication information to the new energy vehicle 100 before conducting the path through which the power supply device 400 supplies power to the load device 300. The second indication information may indicate that the new energy vehicle 100 stops the power supply state. The charging and discharging switching apparatus 200 may, after the new energy vehicle 100 stops the power supply state, conduct the path through which the power supply device 400 supplies power to the load device 300.

To shorten power interruption time of the load device 300 and protect safety of the new energy vehicle 100 and the load device 300, the charging and discharging switching apparatus 200 may further discharge the load device 300 after sending the second indication information. After receiving second response information, the charging and discharging switching apparatus 200 stops discharging the load device 300, and conducts the path through which the power supply device 400 supplies power to the load device 300. The second response information may indicate that the new energy vehicle 100 has stopped the power supply state.

In this embodiment of this application, the power supply device 400 may alternatively charge the new energy vehicle 100 through the charging and discharging switching apparatus 200. For example, after conducting the path through which the power supply device 400 supplies power to the load device 300, the charging and discharging switching apparatus 200 may further conduct a path through which the power supply device 400 charges the new energy vehicle 100.

In this embodiment of this application, the power supply device 400 may further charge the charging and discharging switching apparatus 200. For example, after conducting the path through which the power supply device 400 supplies power to the load device 300, the charging and discharging switching apparatus 200 may be further charged through the power supply device 400.

In this embodiment of this application, there are a plurality of possible implementations of the first condition and the second condition, so that the charging and discharging switching apparatus 200 can flexibly switch a power supply body of the load device 300. An example is as follows.

In a possible implementation, the charging and discharging switching apparatus 200 may further detect a power supply state of the power supply device 400. When the power supply device 400 stops supplying power, the charging and discharging switching apparatus 200 may determine that a first condition is met, so as to switch the power supply body of the load device 300 to the new energy vehicle 100. When the power supply device 400 starts to supply power, the charging and discharging switching apparatus 200 may determine that a second condition is met, so as to switch the power supply body of the load device 300 to the power supply device 400.

In another possible implementation, the charging and discharging switching apparatus 200 is provided with first setting information, and the first setting information may indicate a power supply time segment of a vehicle. In this case, the charging and discharging switching apparatus 200 may further determine, when a current time point is within the power supply time segment of the vehicle, that the first condition is met, so as to switch the power supply body of the load device 300 to the new energy vehicle 100. When the current time point is beyond the power supply time segment of the vehicle, the charging and discharging switching apparatus 200 may determine that the second condition is met, so as to switch the power supply body of the load device 300 to the power supply device 400.

In still another possible implementation, the charging and discharging switching apparatus 200 is provided with second setting information. The second setting information may include at least one of the following information: power consumption statistics information of the load device 300, charge state information of the new energy vehicle 100, travel distance information of the new energy vehicle 100, charging information of the power supply device 400, and the like. In this case, the charging and discharging switching apparatus 200 may further calculate the power supply time segment of the vehicle based on the second setting information. When the current time point is within the power supply time segment of the vehicle, the charging and discharging switching apparatus 200 determines that the first condition is met, so as to switch the power supply body of the load device 300 to the new energy vehicle 100. When the current time point is beyond the power supply time segment of the vehicle, the charging and discharging switching apparatus 200 determines that the second condition is met, so as to switch the power supply body of the load device 300 to the power supply device 400.

A person skilled in the art should understand that embodiments of this application may be provided as a method, a system, or a computer program product. Therefore, this application may use a form of a hardware-only embodiment, a software-only embodiment, or an embodiment with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

These computer program instructions may alternatively be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specified function in one or more processes in the flowcharts and/or in one or more blocks in the block diagrams.

## Claims

1. A charging and discharging switching apparatus (200), comprising: a first switch (K1), a second switch (K2), a switching power supply (A), and a control unit (201), wherein
a first end of the first switch is configured to connect to a power supply device (400), a second end of the first switch is configured to connect to a load device (300), the second end of the first switch is connected to a first end of the second switch and the switching power supply, and a control end of the first switch is connected to the control unit (201);
a second end of the second switch is configured to connect to a electric energy vehicle (100), and a control end of the second switch is connected to the control unit (201);
the control unit (201) is connected to the switching power supply; and
**characterised in that**
the control unit (201) is configured to:
control the switching power supply to discharge after a first condition is met, and control the switching power supply to stop discharging and turn on the second switch after the electric energy vehicle (100) is switched to a power supply state, to conduct a path through which the electric energy vehicle (100) supplies power to the load device (300); and
turn (S310) on the first switch after a second condition is met, to conduct a path through which the power supply device (400) supplies power to the load device (300).

2. The charging and discharging switching apparatus according to claim 1, wherein the charging and discharging switching apparatus further comprises a communications unit (203), and the communications unit (203) is connected to the control unit (201); and
before controlling the switching power supply to discharge after the first condition is met, the control unit (201) is further configured to:
control the communications unit (203) to send first indication information, wherein the first indication information indicates the electric energy vehicle (100) to be switched to the power supply state.

3. The charging and discharging switching apparatus according to claim 2, wherein when controlling the switching power supply to stop discharging after the electric energy vehicle (100) is switched to the power supply state, the control unit (201) is specifically configured to:
after receiving first response information sent by the electric energy vehicle (100), control the switching power supply to stop discharging, wherein the first response information indicates that the electric energy vehicle (100) has been switched to the power supply state.

4. The charging and discharging switching apparatus according to any one of claims 1 to 3, wherein before controlling the switching power supply to discharge, the control unit (201) is further configured to:
disconnect the first switch and the second switch.

5. The charging and discharging switching apparatus according to any one of claims 2 to 4, wherein the control unit (201) is further configured to:
before turning on the first switch after the second condition is met, control the communications unit (203) to send second indication information, wherein the second indication information indicates the electric energy vehicle (100) to stop the power supply state; and
after the electric energy vehicle (100) stops the power supply state, turn on the first switch.

6. The charging and discharging switching apparatus according to claim 5, wherein after controlling the communications unit (203) to send the second indication information, the control unit (201) is further configured to:
disconnect the first switch and the second switch; and
control the switching power supply to discharge; and
when turning on the first switch after the second condition is met, the control unit (201) is specifically configured to:
after receiving second response information sent by the communications unit (203), control the switching power supply to stop discharging, and turn on the first switch, wherein the second response information indicates that the electric energy vehicle (100) has stopped the power supply state.

7. The charging and discharging switching apparatus according to any one of claims 1 to 6, wherein when turning on the first switch, the control unit (201) is further configured to:
turn (S305, S505)on the second switch, to conduct a path through which the power supply device (400) charges the electric energy vehicle (100).

8. The charging and discharging switching apparatus according to any one of claims 1 to 7, wherein when turning on the first switch, the control unit (201) is further configured to:
control the switching power supply to charge.

9. The charging and discharging switching apparatus according to any one of claims 1 to 8, wherein the charging and discharging switching apparatus further comprises a detection unit (205), an input end of the detection unit (205) is connected to the first end of the first switch, and an output end of the detection unit (205) is connected to the control unit (201);
the detection unit (205) is configured to:
detect a power supply state of the power supply device (400);
when the power supply device (400) stops supplying power, send a first detection signal to the control unit (201); and
when the power supply device (400) starts to supply power, send a second detection signal to the control unit (201); and
the control unit (201) is further configured to:
when receiving the first detection signal, determine that the first condition is met; and
when receiving the second detection signal, determine that the second condition is met.

10. The charging and discharging switching apparatus according to any one of claims 1 to 8, wherein the charging and discharging switching apparatus is provided with first setting information, and the first setting information indicates a power supply time segment of a vehicle (100); and
the control unit (201) is further configured to:
when a current time point is within the power supply time segment of the vehicle (100), determine that the first condition is met; and
when the current time point is beyond the power supply time segment of the vehicle (100), determine that the second condition is met.

11. The charging and discharging switching apparatus according to any one of claims 1 to 8, wherein the charging and discharging switching apparatus is provided with second setting information, and the second setting information comprises at least one of the following information:
power consumption statistics information of the load device (300), charge state information of the electric energy vehicle (100), travel distance information of the electric energy vehicle (100), and charging information of the power supply device (400); and
the control unit (201) is further configured to:
calculate a power supply time segment of a vehicle (100) based on the second setting information;
when a current time point is within the power supply time segment of the vehicle (100), determine that the first condition is met; and
when the current time point is beyond the power supply time segment of the vehicle (100), determine that the second condition is met.

12. A charging and discharging switching method, applied to a charging and discharging switching apparatus, wherein the charging and discharging switching apparatus is connected to a load device (300), a power supply device (400), and a electric energy vehicle (100), and the method comprises:
discharging the load device (300) after a first condition is met, and stopping discharging the load device (300) and conducting a path through which the electric energy vehicle (100) supplies power to the load device (300), after the electric energy vehicle (100) is switched to a power supply state; and
conducting, after a second condition is met, a path through which the power supply device (400) supplies power to the load device (300).

13. The method according to claim 12, wherein before the discharging the load device (300) after a first condition is met, the method further comprises:
sending first indication information, wherein the first indication information indicates the electric energy vehicle (100) to be switched to the power supply state.

14. The method according to claim 13, wherein the stopping discharging the load device (300) after the electric energy vehicle (100) is switched to a power supply state comprises:
after receiving first response information sent by the electric energy vehicle (100), stopping discharging the load device (300), wherein the first response information indicates that the electric energy vehicle (100) has been switched to the power supply state.

15. A bidirectional charging system, comprising a electric energy vehicle (100), a load device (300), a power supply device (400), and the charging and discharging switching apparatus according to any one of claims 1 to 11, wherein the charging and discharging switching apparatus is connected to the electric energy vehicle (100), the load device (300), and the power supply device (400).

## Patentansprüche

1. Lade- und Entladeschalteinrichtung (200), umfassend: einen ersten Schalter (K1), einen zweiten Schalter (K2), ein Schaltnetzteil (A) und eine Steuereinheit (201), wobei ein erstes Ende des ersten Schalters konfiguriert ist, um mit einer Stromversorgungsvorrichtung (400) verbunden zu werden, ein zweites Ende des ersten Schalters konfiguriert ist, um mit einer Ladevorrichtung (300) verbunden zu werden, das zweite Ende des ersten Schalters mit einem ersten Ende des zweiten Schalters und dem Schaltnetzteil verbunden ist und ein Steuerende des ersten Schalters mit der Steuereinheit (201) verbunden ist;
ein zweites Ende des zweiten Schalters konfiguriert ist, um mit einem Elektrofahrzeug (100) verbunden zu werden, und ein Steuerende des zweiten Schalters mit der Steuereinheit (201) verbunden ist;
die Steuereinheit (201) mit dem Schaltnetzteil verbunden ist; und
**dadurch gekennzeichnet, dass**
die Steuereinheit (201) konfiguriert ist zum:
Steuern des Schaltnetzteils zum Entladen, nachdem eine erste Bedingung erfüllt wurde, und Steuern des Schaltnetzteils, um das Entladen abzubrechen und den zweiten Schalter einzuschalten, nachdem das Elektrofahrzeug (100) in einen Energieversorgungszustand umgeschaltet wurde, um einen Weg zu betreiben, durch den das Elektrofahrzeug (100) die Ladevorrichtung (300) mit Energie versorgt; und
Einschalten (S310) des ersten Schalters, nachdem eine zweite Bedingung erfüllt wurde, um einen Weg zu betreiben, durch den die Energieversorgungsvorrichtung (400) die Ladevorrichtung (300) mit Energie versorgt.

2. Lade- und Entladeschalteinrichtung nach Anspruch 1, wobei die Lade- und Entladeschalteinrichtung außerdem eine Kommunikationseinheit (203) umfasst und die Kommunikationseinheit (203) mit der Steuereinheit (201) verbunden ist; und
die Steuereinheit (201), vor dem Steuern des Schaltnetzteils zum Entladen, nachdem eine erste Bedingung erfüllt wurde, außerdem konfiguriert ist zum:
Steuern der Kommunikationseinheit (203), um erste Anzeigeinformationen zu senden, wobei die ersten Anzeigeinformationen anzeigen, dass das Elektrofahrzeug (100) in den Energieversorgungszustand umgeschaltet wird.

3. Lade- und Entladeschalteinrichtung nach Anspruch 2, wobei, wenn das Schaltnetzteil gesteuert wird, um das Entladen abzubrechen, nachdem das Elektrofahrzeug (100) in den Energieversorgungszustand umgeschaltet wurde, die Steuereinheit (201) insbesondere konfiguriert ist zum:
nach einem Empfangen von ersten Antwortinformationen, die von dem Elektrofahrzeug (100) gesendet werden, Steuern des Schaltnetzteils, um das Entladen abzubrechen, wobei die ersten Antwortinformationen anzeigen, dass das Elektrofahrzeug (100) in den Energieversorgungszustand umgeschaltet wurde.

4. Lade- und Entladeschalteinrichtung nach einem der Ansprüche 1 bis 3, wobei die Steuereinheit (201), vor dem Steuern des Schaltnetzteils zum Entladen, außerdem konfiguriert ist zum:
Trennen des ersten Schalters und des zweiten Schalters.

5. Lade- und Entladeschalteinrichtung nach einem der Ansprüche 2 bis 4, wobei die Steuereinheit (201) außerdem konfiguriert ist zum:
vor dem Einschalten des ersten Schalters, nachdem die zweite Bedingung erfüllt wurde, Steuern der Kommunikationseinheit (203) zum Senden von zweiten Anzeigeinformationen, wobei die zweiten Anzeigeinformationen das Elektrofahrzeug (100) anweisen, den Energieversorgungszustand abzubrechen; und
nachdem das Elektrofahrzeug (100) den Energieversorgungszustand abgebrochen hat, Einschalten des ersten Schalters.

6. Lade- und Entladeschalteinrichtung nach Anspruch 5, wobei die Steuereinheit (201), nach dem Steuern der Kommunikationseinheit (203) zum Senden der zweiten Anzeigeinformationen, außerdem konfiguriert ist zum:
Trennen des ersten Schalters und des zweiten Schalters; und
Steuern des Schaltnetzteils zum Entladen; und,
wenn der erste Schalter eingeschaltet wird, nachdem die zweite Bedingung erfüllt wurde, die Schalteinheit (201) insbesondere konfiguriert ist zum:
nach einem Empfangen von zweiten Antwortinformationen, die von der Kommunikationseinheit (203) gesendet werden, Steuern des Schaltnetzteils zum Abbrechen des Entladens und zum Einschalten des ersten Schalters, wobei die zweiten Antwortinformationen anzeigen, dass das Elektrofahrzeug (100) den Energieversorgungszustand abgebrochen hat.

7. Lade- und Entladeschalteinrichtung nach einem der Ansprüche 1 bis 6, wobei, wenn der erste Schalter eingeschaltet wird, die Steuereinheit (201) außerdem konfiguriert ist zum:
Einschalten (S305, S505) des zweiten Schalters, um einen Weg zu betreiben, durch den die Energieversorgungsvorrichtung (400) das Elektrofahrzeug (100) auflädt.

8. Lade- und Entladeschalteinrichtung nach einem der Ansprüche 1 bis 7, wobei, wenn der erste Schalter eingeschaltet wird, die Steuereinheit (201) außerdem konfiguriert ist zum:
Steuern des Schaltnetzteils zum Laden.

9. Lade- und Entladeschalteinrichtung nach einem der Ansprüche 1 bis 8, wobei die Lade- und Entladeschalteinrichtung außerdem eine Erkennungseinheit (205) umfasst, ein Eingangsende der Erkennungseinheit (205) mit dem ersten Ende des ersten Schalters verbunden ist und ein Ausgangsende der Erkennungseinheit (205) mit der Steuereinheit (201) verbunden ist;
die Erkennungseinheit (205) konfiguriert ist zum:
Erkennen eines Energieversorgungszustands der Energieversorgungsvorrichtung (400);
wenn die Energieversorgungsvorrichtung (400) die Energieversorgung abbricht, Senden eines ersten Erkennungssignals zu der Steuereinheit (201); und
wenn die Energieversorgungsvorrichtung (400) die Energieversorgung startet, Senden eines zweiten Erkennungssignals zu der Steuereinheit (201); und
die Steuereinheit (201) außerdem konfiguriert ist zum:
wenn das erste Erkennungssignal empfangen wird, Ermitteln, dass die erste Bedingung erfüllt wurde; und,
wenn das zweite Erkennungssignal empfangen wird, Ermitteln, dass die zweite Bedingung erfüllt wurde.

10. Lade- und Entladeschalteinrichtung nach einem der Ansprüche 1 bis 8, wobei der Lade- und Entladeschalteinrichtung erste Einstellungsinformationen bereitgestellt werden und die ersten Einstellungsinformationen ein Zeitsegment einer Energieversorgung eines Fahrzeugs (100) anzeigen; und
die Steuereinheit (201) außerdem konfiguriert ist zum:
wenn ein aktueller Zeitpunkt innerhalb des Zeitsegments der Energieversorgung des Fahrzeugs (100) liegt, Ermitteln, dass die erste Bedingung erfüllt wurde; und,
wenn der aktuelle Zeitpunkt außerhalb des Zeitsegments der Energieversorgung des Fahrzeugs (100) liegt, Ermitteln, dass die zweite Bedingung erfüllt wurde.

11. Lade- und Entladeschalteinrichtung nach einem der Ansprüche 1 bis 8, wobei der Lade- und Entladeschalteinrichtung zweite Einstellungsinformationen bereitgestellt werden und die zweiten Einstellungsinformationen mindestens eine der folgenden Informationen umfassen:
Informationen über eine Energieverbrauchsstatistik der Ladevorrichtung (300), Informationen über einen Ladezustand des Elektrofahrzeugs (100), Informationen über eine Fahrstreckenlänge des Elektrofahrzeugs (100) und Ladeinformationen der Energieversorgungsvorrichtung (400); und
die Steuereinheit (201) außerdem konfiguriert ist zum:
Berechnen eines Zeitsegments einer Energieversorgung eines Fahrzeugs (100) basierend auf den zweiten Einstellungsinformationen;
wenn ein aktueller Zeitpunkt innerhalb des Zeitsegments der Energieversorgung des Fahrzeugs (100) liegt, Ermitteln, dass die erste Bedingung erfüllt wurde; und,
wenn der aktuelle Zeitpunkt außerhalb des Zeitsegments der Energieversorgung des Fahrzeugs (100) liegt, Ermitteln, dass die zweite Bedingung erfüllt wurde.

12. Lade- und Entladeschaltverfahren, das in einer Lade- und Entladeschalteinrichtung angewandt wird, wobei die Lade- und Entladeschalteinrichtung mit einer Ladevorrichtung (300), einer Energieversorgungsvorrichtung (400) und einem Elektrofahrzeug (100) verbunden ist, und wobei das Verfahren umfasst:
Entladen der Ladevorrichtung (300), nachdem eine erste Bedingung erfüllt wurde, und Abbrechen des Entladens der Ladevorrichtung (300) und
Betreiben eines Wegs, durch den das Elektrofahrzeug (100) die Ladevorrichtung (300) mit Energie versorgt, nachdem das Elektrofahrzeug (100) in einen Energieversorgungszustand umgeschaltet wurde; und,
nachdem eine zweite Bedingung erfüllt wurde, Betreiben eines Wegs, durch den die Energieversorgungsvorrichtung (400) die Ladevorrichtung (300) mit Energie versorgt.

13. Verfahren nach Anspruch 12, wobei das Verfahren, vor dem Entladen der Ladevorrichtung (300), nachdem eine erste Bedingung erfüllt wurde, außerdem umfasst:
Senden von ersten Anzeigeinformationen, wobei die ersten Anzeigeinformationen anzeigen, dass das Elektrofahrzeug (100) in den Energieversorgungszustand umgeschaltet wird.

14. Verfahren nach Anspruch 13, wobei das Abbrechen des Entladens der Ladevorrichtung (300), nachdem das Elektrofahrzeug (100) in einen Energieversorgungszustand umgeschaltet wurde, umfasst:
nach einem Empfangen von ersten Antwortinformationen, die von dem Elektrofahrzeug (100) gesendet werden, Abbrechen des Entladens der Ladevorrichtung (300), wobei die ersten Antwortinformationen anzeigen, dass das Elektrofahrzeug (100) in den Energieversorgungszustand umgeschaltet wurde.

15. Bidirektionales Ladesystem, das ein Elektrofahrzeug (100), eine Ladevorrichtung (300), eine Energieversorgungsvorrichtung (400) und die Lade- und Entladeschalteinrichtung nach einem der Ansprüche 1 bis 11 umfasst, wobei die Lade- und Entladeschalteinrichtung mit dem Elektrofahrzeug (100), der Ladevorrichtung (300) und der Energieversorgungsvorrichtung (400) verbunden ist.

## Revendications

1. Appareil de commutation de charge et de décharge (200), comportant un premier commutateur (K1), un deuxième commutateur (K2), une alimentation à découpage (A), et une unité de commande (201), dans lequel
une première extrémité du premier commutateur est configurée de façon à se connecter un bloc d'alimentation (400), une deuxième extrémité du premier commutateur est configurée de façon à se connecter à une charge électrique (300), la deuxième extrémité du premier commutateur est connectée à une première extrémité du deuxième commutateur et à l'alimentation à découpage, et une extrémité de commande du premier commutateur est connectée à l'unité de commande (201) ;
une deuxième extrémité du deuxième commutateur est configurée de façon à se connecter à un véhicule à énergie électrique (100), et une extrémité de commande du deuxième commutateur est connectée à l'unité de commande (201) ;
l'unité de commande (201) est connectée à l'alimentation à découpage ; et **caractérisé en ce que**
l'unité de commande (201) est configurée de façon à :
commander la décharge de l'alimentation à découpage après qu'une première condition a été remplie, et à commander l'arrêt de la décharge de l'alimentation à découpage et à connecter le deuxième commutateur après que le véhicule à énergie électrique (100) a été commuté dans un état d'alimentation, afin d'établir un chemin à travers lequel le véhicule à énergie électrique (100) alimente de l'énergie à la charge électrique (300) ; et de façon à
connecter (S310) le premier commutateur après que la deuxième condition a été remplie, afin d'établir un chemin à travers lequel le bloc d'alimentation (400) alimente de l'énergie à la charge électrique (300).

2. Appareil de commutation de charge et de décharge selon la revendication 1, l'appareil de commutation de charge et de décharge comprenant en outre une unité de communication (203), et l'unité de communication (203) étant connectée à l'unité de commande (201) ; et
avant la commande de la décharge de l'alimentation à découpage après que la première condition a été remplie, l'unité de commande (201) est configurée en outre de façon à:
commander l'envoi de premières informations d'indication par l'unité de communication (203), les premières informations d'indication indiquant le véhicule à énergie électrique (100) à commuter dans l'état d'alimentation.

3. Appareil de commutation de charge et de décharge selon la revendication 2, dans lequel, lorsqu'elle commande l'arrêt de la décharge de l'alimentation à découpage après que le véhicule à énergie électrique (100) a été commuté dans l'état d'alimentation, l'unité de commande (201) est configurée spécifiquement de façon à : après avoir reçu des premières informations de réponse envoyées par le véhicule à énergie électrique (100), commander l'arrêt de la décharge de l'alimentation à découpage, les premières informations de réponse indiquant que le véhicule à énergie électrique (100) a été commuté dans l'état d'alimentation.

4. Appareil de commutation de charge et de décharge selon l'une quelconque des revendications 1 à 3, dans lequel, avant de commander la décharge de l'alimentation à découpage, l'unité de commande (201) est configurée en outre de façon à :
déconnecter le premier commutateur et le deuxième commutateur.

5. Appareil de commutation de charge et de décharge selon l'une quelconque des revendications 2 à 4, dans lequel l'unité de commande (201) est configurée en outre de façon à :
avant de connecter le premier commutateur après que la deuxième condition a été remplie, commander l'envoi, par l'unité de communication (203), de deuxièmes informations d'indication, les deuxièmes informations d'indication indiquant l'arrêt de l'état d'alimentation par le véhicule à énergie électrique (100) ; et à
après que le véhicule à énergie électrique (100) a arrêté l'état d'alimentation, connecter le premier commutateur.

6. Appareil de commutation de charge et de décharge selon la revendication 5, dans lequel, après la commande de l'envoi par l'unité de communication (203) des deuxièmes informations d'indication, l'unité de commande (201) est configurée en outre de façon à :
déconnecter le premier commutateur et le deuxième commutateur ; et à commander la décharge de l'alimentation à découpage ; et
lors de la connexion du premier commutateur après que la deuxième condition a été remplie, l'unité de commande (201) est configurée spécifiquement de façon à :
après avoir reçu des deuxièmes informations de réponse envoyées par l'unité de communication (203), commander l'arrêt de la décharge de l'alimentation à découpage, et connecter le premier commutateur, les deuxièmes informations de réponse indiquant que le véhicule à énergie électrique (100) a arrêté l'état d'alimentation.

7. Appareil de commutation de charge et de décharge selon l'une quelconque des revendications 1 à 6, dans lequel, lorsqu'elle connecte le premier commutateur, l'unité de commande (201) est configurée en outre de façon à :
connecter (S305, S505) le deuxième commutateur, afin d'établir un chemin à travers lequel le bloc d'alimentation (400) charge le véhicule à énergie électrique (100).

8. Appareil de commutation de charge et de décharge selon l'une quelconque des revendications 1 à 7, dans lequel, lorsqu'elle connecte le premier commutateur, l'unité de commande (201) est configurée en outre de façon à :
commander la charge de l'alimentation à découpage.

9. Appareil de commutation de charge et de décharge selon l'une quelconque des revendications 1 à 8, l'appareil de commutation de charge et de décharge comprenant en outre une unité de détection (205), une extrémité d'entrée de l'unité de détection (205) étant connectée à la première extrémité du premier commutateur, et une extrémité de sortie de l'unité de détection (205) étant connectée à l'unité de commande (201) ;
l'unité de détection (205) étant configurée de façon à :
détecter un état d'alimentation du bloc d'alimentation (400) ;
lorsque le bloc d'alimentation (400) arrête d'alimenter de l'énergie, envoyer un premier signal de détection à l'unité de commande (201) ; et à
lorsque le bloc d'alimentation (400) commence à alimenter de l'énergie, envoyer un deuxième signal de détection à l'unité de commande (201) ; et
l'unité de commande (201) étant configurée en outre de façon à :
lorsqu'elle reçoit le premier signal de détection, déterminer que la première condition est remplie ; et à
lorsqu'elle reçoit le deuxième signal de détection, déterminer que la deuxième condition est remplie.

10. Appareil de commutation de charge et de décharge selon l'une quelconque des revendications 1 à 8, des premières informations de réglage étant fournies à l'appareil de commutation de charge et de décharge, et les premières informations de réglage indiquant un créneau temporel d'alimentation d'un véhicule (100) ; et
l'unité de commande (201) étant configurée en outre de façon à :
lorsqu'un point temporel courant est dans le créneau temporel d'alimentation du véhicule (100), déterminer que la première condition est remplie ; et à
lorsque le point temporel courant est au-delà du créneau temporel d'alimentation du véhicule (100), déterminer que la deuxième condition est remplie.

11. Appareil de commutation de charge et de décharge selon l'une quelconque des revendications 1 à 8, des deuxièmes informations de réglage étant fournies à l'appareil de commutation de charge et de décharge, et les deuxièmes informations de réglage comprenant au moins une des informations suivantes :
une information statistique de la consommation d'énergie de la charge électrique (300), une information d'état de charge du véhicule à énergie électrique (100), une information de distance parcourue par le véhicule à énergie électrique (100), et une information de charge du bloc d'alimentation (400) ; et
l'unité de commande (201) étant configurée en outre de façon à :
calculer un créneau temporel d'alimentation d'un véhicule (100) en se basant sur les deuxièmes informations de réglage ;
lorsqu'un point temporel est dans le créneau temporel d'alimentation du véhicule (100), déterminer que la première condition est remplie ; et
lorsque le point temporel courant est au-delà du créneau temporel d'alimentation du véhicule (100), déterminer que la deuxième condition est remplie.

12. Procédé de commutation de charge et de décharge, appliqué à un appareil de commutation de charge et de décharge, dans lequel l'appareil de commutation de charge et de décharge est connecté à une charge électrique (300), à un bloc d'alimentation (400), et à un véhicule à énergie électrique (100), et le procédé comprenant :
la décharge de la charge électrique (300) après qu'une première condition a été remplie, et l'arrêt de la décharge de la charge électrique (300) et l'établissement d'un chemin à travers lequel le véhicule à énergie électrique (100) alimente de l'énergie à la charge électrique (300), après que le véhicule à énergie électrique (100) a été commuté dans un état d'alimentation ; et
après qu'une deuxième condition a été remplie, l'établissement d'un chemin à travers lequel le bloc d'alimentation (400) alimente de l'énergie à la charge électrique (300).

13. Procédé selon la revendication 12, le procédé comprenant en outre, avant la décharge de la charge électrique (300) après qu'une première condition a été remplie :
l'envoi de premières informations d'indication, les premières informations d'indication indiquant le véhicule à énergie électrique (100) à commuter dans l'état d'alimentation.

14. Procédé selon la revendication 13, dans lequel l'arrêt de la décharge de la charge électrique (300) après que le véhicule à énergie électrique (100) a été commuté dans un état d'alimentation comprend :
après avoir reçu des premières informations de réponse envoyées par le véhicule à énergie électrique (100), l'arrêt de la décharge de la charge électrique (300), les premières informations de réponse indiquant que le véhicule à énergie électrique (100) a été commuté dans l'état d'alimentation.

15. Système de charge bidirectionnel, comprenant un véhicule à énergie électrique (100), une charge électrique (300), un bloc d'alimentation (400), et l'appareil de commutation de charge et de décharge selon l'une quelconque des revendications 1 à 11, l'appareil de commutation de charge et de décharge étant connecté au véhicule à énergie électrique (100), à la charge électrique (300) et au bloc d'alimentation (400).
